# FASCICULE DE BREVET EUROPEEN

(11) **EP 1 395 448 B1**
(45) Date de publication et mention de la délivrance du brevet: **14.09.2005**
(21) Numéro de dépôt: 02738087.2
(22) Date de dépôt: 17.05.2002
(51) Int. Cl.: B60C 15/00, B60C 15/024, B60C 13/00

(54) **PNEUMATIQUE AVEC NAPPE CARCASSE A BI-ANCRAGE**
LUFTREIFEN MIT EINER KARKASSE, DIE ZWEIVERANKERUNG ENTHÄLT
TYRE WITH DOUBLE-ANCHORING CASING PLY

(30) Priorité: 21.05.2001 FR 0107199
(43) Date de publication de la demande: 10.03.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: AUXERRE, Pascal, F-63130 Royat (FR)
(74) Mandataire: Dequire, Philippe Jean-Marie Denis
(86) Numéro de dépôt international: PCT/EP2002/005479
(87) Numéro de publication internationale: WO 2002/094584

(56) Documents cités:
- WO-A-99/64225
- US-A- 4 057 092

## Description

La présente invention concerne les pneumatiques. Plus particulièrement, elle concerne un pneumatique comportant un protège jante servant de point d'ancrage pour au moins une portion de structure de renfort de type carcasse.

Le renforcement des carcasses des pneumatiques est à l'heure actuelle constitué par une ou plusieurs nappes (désignées classiquement « nappes carcasses » de par le procédé de fabrication sous la forme de produits semi-finis en forme de nappes), pourvues de renforts filaires le plus souvent radiaux. L'ancrage ou le maintien de ces nappes ou renforts s'effectue, de façon traditionnelle par un retournement d'une portion de nappe autour d'une tringle disposée dans le bourrelet du pneumatique.

Par ailleurs, il existe aujourd'hui des pneumatiques qui ne disposent pas du traditionnel retournement de nappe carcasse autour d'une tringle, ni même d'une tringlé, selon le sens traditionnel de cet élément. Par exemple, le document EP 0 582 196, décrit une façon d'agencer une structure de renfort de type carcasse dans les bourrelets, en disposant de façon adjacente à ladite structure de renfort des filaments circonférentiels, le tout étant noyé dans un mélange caoutchoutique d'ancrage ou de liaison, de préférence à haut module d'élasticité. Plusieurs agencements sont proposés dans ce document. Ce document fait par ailleurs référence à des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau ayant une forme permettant d'obtenir directement un profil s'apparentant au profil final du pneumatique en cours de fabrication. Ainsi, dans ce cas, plutôt que des « nappes carcasses » au sens classique, on retrouve plus spécifiquement des «renforts de type carcasse ».

Un pneumatique selon le préambule de la revendication 1 est connu de WO-A-9 964 225.

L'ancrage de la structure de renfort, ou nappe carcasse (dans le cas où le pneumatique est assemblé avec différents semi-finis, dont une nappe carcasse), est d'une importance particulière afin d'assurer la pérennité du pneumatique. La réalisation d'un ancrage durable et sûr implique souvent l'utilisation d'un espace important au niveau du bourrelet et l'utilisation de matériaux de haute qualité, donc coûteux. La présence d'enroulements filaires ou d'une tringle implique par ailleurs une masse importante.

Par ailleurs, les spécifications des constructeurs automobiles d'une part et les normes en vigueur dans les différents pays d'autre part, font que pour un pneumatique d'une dimension donnée, on retrouve une jante également de dimensions données. Ces standards techniques font qu'il est de plus en plus diffcile de sortir du compromis habituel de l'ancrage classique que l'on rencontre sur les pneumatiques de types connus. Les fabricants de pneumatiques utilisent donc en général d'autres des éléments d'architectures autres que les bourrelets et les ancrages pour optimiser les caractéristiques des produits.

Ainsi, l'invention prévoit un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage principale permettant le maintien de la structure de renfort, ledit pneumatique comportant, à une position radialement extérieure par rapport à ladite zone d'ancrage, un protège jante pourvu d'un bec caoutchoutique s'étendant axialement extérieurement par rapport au flanc et comportant au moins une zone d'ancrage secondaire comprenant une pluralité d'enroulements filaires circonférentiels, lesdits enroulements coopérant avec une portion adjacente d'une structure de renfort secondaire par l'intermédiaire d'un mélange caoutchoutique d'ancrage, caractérisé en ce que lesdites zones d'ancrage sont orientées sensiblement radialement.

Comme son nom l'indique, le protège jante confère un point d'appui s'étendant axialement au-delà de la jante : en cas de choc ou de frottement contre un élément agresseur tel par exemple un trottoir, le protège jante évite le contact avec la jante. On préfère dans ce cas une légère détérioration du protège jante, telle une griffure ou éraflure, en général peu visible, et surtout sans aucune incidence sur la pérennité du pneumatique, à une détérioration de la jante qui serait souvent plus facilement visible. Par ailleurs, la présence de la zone d'ancrage secondaire dans le protège jante contribue à rigidifier ce dernier, améliorant sa robustesse et sa durabilité.

Par ailleurs, l'utilisation du protège jante afin d'y disposer une zone d'ancrage secondaire permet d'optimiser l'usage du protège jante en tant que tel. Ainsi, on bénéficie de l'espace disponible dans le protège jante, en libérant le bourrelet qui bénéficie de la sorte d'un plus grand volume disponible pour disposer les différents éléments constituants. L'ancrage étant réparti entre le bourrelet et le protège jante, de nouvelles possibilités d'architectures ou de design sont ainsi offertes, permettant par exemple d'utiliser l'espace restreint du bourrelet de façon optimale. Ainsi par exemple, la présence de la zone d'ancrage secondaire au niveau du protège jante contribue grandement à améliorer le comportement des pneumatiques, notamment la tenue en dérive.

D'autre part, l'utilisation d'alignements ou enroulements filaires en coopération avec un mélange caoutchoutique d'ancrage, de préférence à haut module, et de manière préférentielle, en coopération également avec une portion voisine ou adjacente de structure de renfort, contribue à la séparation des rigidités. On peut donc, de la sorte, augmenter la rigidité transversale tout en conservant la rigidité radiale sensiblement inchangée.

La structure de renfort secondaire est de préférence une portion de structure s'étendant depuis ledit protège jante jusqu'à une portion du flanc située radialement extérieurement. Selon un mode d'exécution préférentiel de l'invention, ladite structure secondaire coopère avec la première structure de renfort.

Selon un premier mode de réalisation avantageux de l'invention, ladite structure de renfort secondaire s'étend d'un flanc à l'autre du pneumatique le long d'un cheminement méridien sensiblement voisin de celui de la première structure de renfort de type carcasse. Le pneumatique comporte alors deux structures de renfort.

Dans un second mode de réalisation avantageux de l'invention, la structure de renfort secondaire consiste en une pluralité de sections de structure de renfort de type carcasse de longueurs circonférentielles limitées dont la position axiale s'écarte des deux autres sections circonférentielles voisines depuis le flanc vers ledit protège jante. Il peut s'agir de portions de la structure de renfort principale dont certaines portions sont découplées à partir d'une certaine position le long du flanc, radialement extérieurement par rapport au protège jante, pour se prolonger radialement intérieurement et axialement extérieurement depuis le point de séparation vers la zone d'ancrage secondaire. Le pneumatique est ainsi constitué d'une alternance circonférentielle entre zones découplées d'une part, et zones non-découplées ou mono-structures jusqu'à leur ancrage dans le bourrelet, d'autre part.

La zone d'ancrage principale peut être avantageusement réalisée en particulier selon deux types principaux de structures : tout d'abord, elle comprend une pluralité d'enroulements circonférentiels coopérant avec la portion adjacente de structure de renfort par l'intermédiaire d'un mélange caoutchoutique d'ancrage. Selon le second type, elle comporte une tringle autour de laquelle une portion de la structure de renfort de type carcasse est au moins partiellement enroulée ou retournée.

Selon une forme de réalisation avantageuse de l'invention, le mélange caoutchoutique de la zone d'ancrage secondaire est similaire à celui de la zone d'ancrage principale. La conception et la fabrication du pneumatique sont ainsi simplifiés. On obtient également une homogénéité de certaines propriétés.

Selon un exemple avantageux, au moins une des zones d'ancrage comporte ou est généralement constituée d'un mélange caoutchoutique de haut module d'élasticité. Ce mélange peut par exemple être prévu d'un seul côté des alignements filaires. Un module élevé contribue à assurer un ancrage optimal. A titre d'exemple non limitatif, le module d'élasticité d'un tel mélange peut atteindre ou même dépasser 15 Mpa, et même dans certains cas atteindre, voire dépasser 40 Mpa.

Selon un autre exemple avantageux, le mélange caoutchoutique d'ancrage s'étend le long de la structure de renfort depuis la zone d'ancrage primaire jusqu'à la zone d'ancrage secondaire.

Les alignements filaires de la zone secondaire sont avantageusement de nature similaire à ceux de la zone primaire.

Selon une variante avantageuse, la zone secondaire comporte plusieurs types de fils. Il peut s'agir de fils de nature métallique, textile ou de type hybride.

Qu'il s'agisse de la zone d'ancrage principale ou secondaire, un enroulement ou alignement peut comprendre un seul ou plusieurs fils. Les alignements de fils peuvent également être agencés et fabriqués de plusieurs façons. Par exemple, un alignement peut avantageusement être constitué d'un seul fil enroulé (sensiblement à zéro degré) en spirale sur plusieurs tours, de préférence depuis le plus petit diamètre vers le plus grand diamètre. Il peut également être constitué de plusieurs fils concentriques posés l'un dans l'autre, de façon à ce que l'on superpose des anneaux de diamètres progressivement croissants. Il n'est pas nécessaire d'ajouter un mélange de caoutchouc pour assurer l'imprégnation du fil ou des enroulements circonférentiels de fil. Les fils peuvent aussi être discontinus le long du parcours circonférentiel.

Selon un autre exemple avantageux, certains fils sont de type sensiblement élastique. Les fils élastiques sont disposés de préférence dans la portion radialement externe du moyen de liaison mécanique. Ce type de fil procure un comportement adapté aux éventuelles zones de compression qui sont susceptibles de se former en fonctionnement, par exemple lorsque le flanc est repoussé vers l'intérieur. La probabilité de formation de telles zones est plus élevée à mesure que l'on s'éloigne du bourrelet, radialement extérieurement.

Grâce à l'utilisation de différents types de fils, avec différentes propriétés ou différents matériaux, chacun à un endroit bien spécifique, on peut optimiser les caractéristiques de la zone basse du pneumatique.

Une partie ou la totalité des fils de l'alignement est avantageusement non métallique, et de préférence de type textile, tels des fils à base d'aramide, de polyester aromatique, ou encore d'autres types de fils à modules moins élevés tels des fils à base de PET, nylon, rayonne, etc. Ces fils ont avantageusement un module élastique plus faible que celui des fils métalliques de la zone d'ancrage.

Tous les détails de réalisation sont donnés dans la description qui suit, complétée par les figures 1 à 3 où:
la figure 1 est une coupe radiale montrant essentiellement un flanc et un bourrelet d'une première forme d'exécution d'un pneumatique selon l'invention ;
la figure 2 est une coupe radiale montrant essentiellement un flanc et un bourrelet d'une seconde forme d'exécution d'un pneumatique selon l'invention;
la figure 3 est une coupe radiale montrant essentiellement un flanc et un bourrelet d'une variante de la forme d'exécution de la figure 1.

Pour rappel, "radialement vers le haut", ou "radialement supérieur" ou "radialement extérieurement" signifie vers les plus grands rayons.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Une structure de renfort ou de renforcement de type carcasse sera dite radiale lorsque ses fils sont disposés à 90°, mais aussi, selon la terminologie en usage, à un angle proche de 90°.

Par caractéristiques du fil, on entend par exemple ses dimensions, sa composition, ses caractéristiques et propriétés mécaniques (notamment le module), ses caractéristiques et propriétés chimiques, etc.

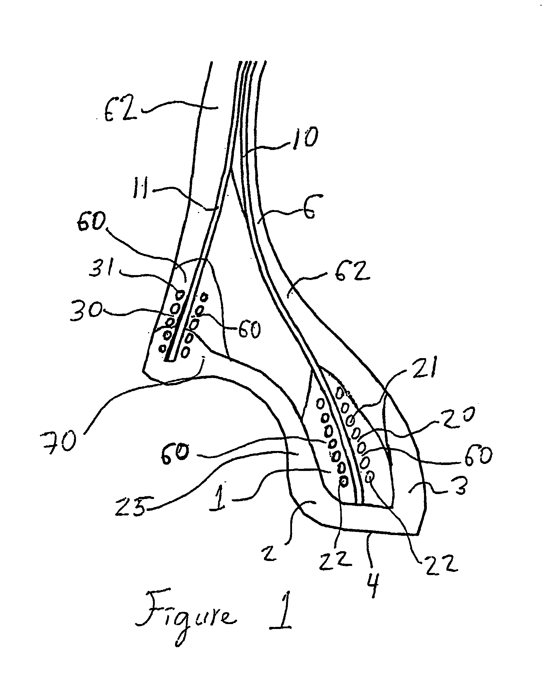

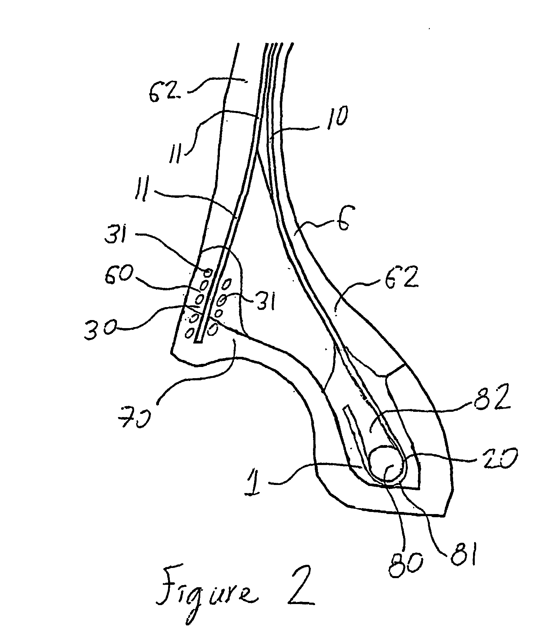

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré aux figures 1 et 2. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6. Un mélange caoutchoutique de flanc 62, avantageusement de module plus faible que le mélange d'ancrage 60, est prévu le long des flancs.

Une zone 25 de mélange protecteur, dont le module d'élasticité est inférieur à celui du mélange de la zone d'ancrage, est avantageusement prévu le long du contour externe du bourrelet, par exemple afin de favoriser le contact avec la jante et protéger la zone d'ancrage.

Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être modifié lors de la confection.

Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 10 coopèrent avec les enroulements filaires. Il se crée ainsi un ancrage de ces portions dans lesdits bourrelets. Afin de favoriser cet ancrage, l'espace entre les fils circonférentiels et la structure de renfort est occupé par un mélange caoutchoutique 60 de liaison ou d'ancrage. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange à haut module d'élasticité dans la zone d'intersection entre l'arrangement de fils et la structure de renfort, formant ainsi une zone d'ancrage principale 20. A titre d'exemple non limitatif, le module d'élasticité d'un tel mélange peut atteindre ou même dépasser 15 Mpa, et même dans certains cas atteindre, voire dépasser 40 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Dans l'exemple de la figure 1, de chaque côté de la structure de renfort, le bourrelet comprend un agencement de fils d'ancrage constitué de piles de fils juxtaposées et disposées de part et d'autre de la structure de renfort 10. Elles sont avantageusement disposées à proximité immédiate de la structure de renfort. La structure illustrée à la figure 1 est particulièrement simplifiée et simple à réaliser. Certains efforts de la structure de renfort sont transmis aux enroulements à zéro degré par l'intermédiaire du mélange 60.

Le pneumatique comporte par ailleurs un protège jante 70. Ce dernier consiste en une bande circonférentielle caoutchoutique axialement extérieure au flanc et située sensiblement radialement extérieurement au bourrelet 1. Ce protège jante joue un rôle de protection en évitant tout contact entre la jante disposée sur cette même roue et tout objet ou obstacle externe susceptible d'endommager ladite jante. Il s'agit d'un élément fort utile pour les véhicules équipés de jantes en alliage tel que l'aluminium. Elles contribuent par ailleurs grandement à l'aspect visuel du véhicule.

Le pneumatique comporte en plus une zone d'ancrage secondaire 30. Cette zone est destinée à coopérer avec une structure de renfort secondaire 11 de type carcasse. Les caractéristiques de cette zone secondaire sont avantageusement similaires à celles préalablement décrites pour la zone principale 20. Cette zone 30 est au moins partiellement disposée dans le protège jante 70.

Dans les différents exemples illustrés aux figures, la zone d'ancrage secondaire prend la forme d'au moins un alignement filaire ou alignement de fils de renfort 31, disposé au voisinage ou à proximité immédiate d'une portion de structure de renfort secondaire 11.

L'alignement peut avantageusement être constitué d'un seul fil enroulé en spirale, de préférence depuis le plus petit diamètre vers le plus grand diamètre. Une pile peut également être constituée de plusieurs fils concentriques posés l'un dans l'autre. A la figure 1, l'alignement est disposé sensiblement à zéro degré.

L'agencement 30 de fils 31 peut se prolonger sensiblement radialement vers le flanc et même le long d'une portion de celui-ci.

Le nombre d'enroulements, l'écartement radial, et la position radiale de l'agencement peuvent varier selon une infinité de possibilités. Ces caractéristiques sont définies en fonction des qualités recherchées notamment au niveau de la zone basse et du flanc du pneumatique, telles la rigidité, la résistance à l'usure, l'endurance, etc. Par exemple, l'agencement 30 de fils 31 s'étend sensiblement radialement depuis la base de la structure de renfort 11.

Les fils sont préférentiellement métalliques. Diverses variantes prévoient avantageusement des fils de nature textile, comme par exemple en aramide, nylon, PET, PEN, ou hybride.

Selon l'invention, l'utilisation d'alignements ou enroulements filaires 31 en coopération avec un mélange caoutchoutique d'ancrage 60, de préférence à haut module, et de manière préférentielle, en coopération également avec une portion voisine ou adjacente de structure de renfort, contribue à la pérennité de l'ancrage.

La structure de renfort secondaire 11 du pneumatique peut, selon le cas, se présenter sous plusieurs formes. De préférence, la portion de structure s'étend depuis ledit protège jante jusqu'à une portion du flanc située radialement extérieurement. Selon un premier exemple avantageux, la structure de renfort secondaire 11 s'étend d'un flanc à l'autre du pneumatique le long d'un cheminement méridien sensiblement voisin de celui de la première structure de renfort de type carcasse. Dans un tel cas, les deux structures de renfort du pneumatique se côtoient le long d'une portion de leurs parcours, puis, à une certaine position radiale le long du flanc, la structure 11 secondaire s'écarte de la structure principale 10 et se prolonge vers le protège jante 70, où sa portion d'extrémité est ancrée dans la zone d'ancrage secondaire 30.

Selon un autre exemple de réalisation avantageux, la structure de renfort secondaire 11 consiste en une pluralité de sections de structure de renfort de type carcasse de longueurs circonférentielles limitées dont la position axiale s'écarte des deux autres sections circonférentielles voisines depuis le flanc vers ledit protège jante. Dans cet exemple, la circonférence du pneumatique est subdivisée en zones où certaines portions d'une seule structure 10 sont ancrées dans le bourrelet, et d'autres zones où la structure 10 se sépare pour former la structure secondaire 11, la structure 11 étant alors ancrée dans le protège jante. Ces zones sont de préférence disposées en alternance le long de la circonférence du pneumatique. Cet exemple résulte donc en une alternance circonférentielle de zones où tantôt la structure se sépare en un point donné du flanc pour former les structures 10 et 11, tantôt la structure 10 se prolonge vers le bourrelet jusqu'à un ancrage dans ce dernier.

Dans le premier de ces deux exemples, le pneumatique comporte deux structures de renfort, l'une ancrée dans les bourrelets, l'autre ancrée dans les protège jante. Dans le second exemple, la structure 11, depuis le protège jante, se prolonge et rejoint la structure 10 à une certaine position radiale le long du flanc, pour ne former, à partir de ce point d'imbrication, qu'une seule structure, se prolongeant de préférence jusqu'à un point symétrique de désimbrication, dans l'autre flanc.

Dans ce cas, la structure de renfort secondaire 11 coopère avec ladite première structure de renfort.

Dans la forme d'exécution illustrée à la figure 2, la zone d'ancrage principal 20 comporte une tringle 80 autour de laquelle une portion de la structure de renfort de type carcasse 10 est au moins partiellement enroulée. On obtient ainsi un retournement 81 ou portion retournée, le tout préférentiellement dans un mélange caoutchoutique 82 d'ancrage de type connu.

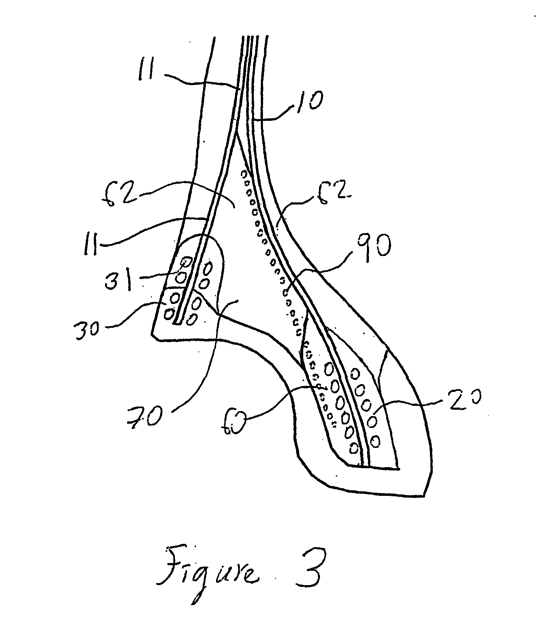

La figure 3 illustre une variante de l'exemple de la figure 1, dans laquelle une pluralité d'enroulement circonférentiels 90 s'étendent entre le bourrelet d'une part et la zone où les structures 10 et 11 convergent l'une vers l'autre. Dans une première portion radialement intérieure, les enroulements beignent dans un mélange caoutchoutique d'ancrage 60, tandis que dans une zone radialement extérieure, les enroulements 90 sont disposés dans un mélange flanc 62 dont le module d'élasticité est avantageusement inférieur à celui du mélange d'ancrage 60.

## Revendications

1. Pneumatique comportant au moins une structure de renfort (10) de type carcasse ancrée de chaque côté du pneumatique dans un bourrelet (1) dont la base est destinée à être montée sur un siège de jante, chaque bourrelet se prolongeant radialement vers l'extérieur par un flanc (6), les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage principale (20) permettant le maintien de la structure de renfort, ledit pneumatique comportant, à une position radialement extérieure par rapport à ladite zone d'ancrage, un protège jante (70) pourvu d'un bec caoutchoutique s'étendant axialement extérieurement par rapport au flanc (6) et comportant au moins une zone d'ancrage secondaire (30) comprenant une pluralité d'enroulements filaires circonférentiels, lesdits enroulements coopérant avec une portion adjacente d'une structure de renfort secondaire (11) par l'intermédiaire d'un mélange caoutchoutique d'ancrage (60), **caractérisé en ce que** lesdites zones d'ancrage sont orientées sensiblement radialement.

2. Pneumatique selon la revendication 1, dans lequel la structure de renfort secondaire (11) est une portion de structure s'étendant depuis ledit protège jante (70) jusqu'à une portion du flanc située radialement extérieurement.

3. Pneumatique selon l'une des revendications 1 ou 2, dans lequel la structure de renfort secondaire (11) coopère avec ladite première structure de renfort (10).

4. Pneumatique selon l'une des revendications 1 à 3, dans lequel ladite structure de renfort secondaire (11) s'étend d'un flanc à l'autre du pneumatique le long d'un cheminement méridien sensiblement voisin de celui de la première structure de renfort (10) de type carcasse.

5. Pneumatique selon l'une des revendications 1 à 3, dans lequel la structure de renfort secondaire (11) consiste en une pluralité de sections de structure de renfort de type carcasse de longueurs circonférentielles limitées dont la position axiale s'écarte des deux autres sections circonférentielles voisines depuis le flanc vers ledit protège jante.

6. Pneumatique selon l'une des revendications 1 à 5, dans lequel la zone d'ancrage principale (20) comprend une pluralité d'enroulements circonférentiels (21) coopérant avec la portion adjacente de structure de renfort (10) par l'intermédiaire d'un mélange caoutchoutique d'ancrage (60).

7. Pneumatique selon l'une des revendications 1 à 5, dans lequel la zone d'ancrage principale (20) comporte une tringle (80) autour de laquelle une portion de la structure de renfort (10) de type carcasse est au moins partiellement enroulée.

## Patentansprüche

1. Luftreifen, der mindestens eine Verstärkungsstruktur (10) vom Karkassentyp aufweist, die auf jeder Seite des Luftreifens in einem Wulst (1) verankert ist, dessen Basis für die Montage auf einem Felgensitz vorgesehen ist, wobei sich jeder Wulst radial nach außen in eine Flanke (6) erstreckt, sich die Flanken radial in Richtung außen in einem Laufstreifen fortsetzen, sich die Verstärkungsstruktur vom Karkassentyp in Umfangsrichtung vom Wulst zur Flanke in einer Scheitelbewehrung fortsetzt, jeder Wulst im Übrigen eine Hauptverankerungszone (20) aufweist, die die Fixierung der Verstärkungsstruktur ermöglicht, der Luftreifen in einem in Bezug auf die Verankerungszone radial äußeren Bereich einen Felgenschutz (70) aufweist, der mit einer Kautschukzunge versehen ist, die sich axial in Bezug auf die Flanke (6) nach außen erstreckt, und mindestens eine sekundäre Verstärkungszone (30) aufweist, die eine Vielzahl von umlaufenden Drahtwicklungen enthält, wobei die Wicklungen mit einem angrenzenden Bereich einer sekundären Verstärkungsstruktur (11) über eine Verankerungskautschukmischung (60) zusammenwirken, **dadurch gekennzeichnet, dass** die Verankerungszonen in etwa radial angeordnet sind.

2. Luftreifen nach Anspruch 1, wobei es sich bei der sekundären Verstärkungsstruktur (11) um einen Teil der Konstruktion handelt, der sich vom Felgenschutz (70) bis in einen radial außen liegenden Bereich der Flanke erstreckt.

3. Luftreifen nach einem der Ansprüche 1 oder 2, wobei die sekundäre Verstärkungsstruktur (11) mit der Hauptverstärkungsstruktur (10) zusammenwirkt.

4. Luftreifen nach einem der Ansprüche 1 bis 3, wobei die sekundäre Verstärkungsstruktur (11) nach einem Meridianverlauf in etwa benachbart zu dem Verlauf der Hauptverstärkungsstruktur (10) vom Karkassentyp von einer Flanke des Luftreifens zur anderen verläuft.

5. Luftreifen nach einem der Ansprüche 1 bis 3, wobei die sekundäre Verstärkungsstruktur (11) aus vielen Abschnitten der Verstärkungsstruktur vom Karkassentyp von in Umfangsrichtung begrenzten Längen besteht, deren axiale Position von den beiden anderen in Umfangsrichtung benachbarten Abschnitten von der Flanke ab in Richtung Felgenschutz abweicht.

6. Luftreifen nach einem der Ansprüche 1 bis 5, wobei die Hauptverankerungszone (20) viele umlaufende Wicklungen (21) umfasst, die mit dem angrenzenden Bereich der Verstärkungsstruktur (10) über eine Verankerungskautschukmischung (60) zusammenwirken.

7. Luftreifen nach einem der Ansprüche 1 bis 5, wobei die Hauptverankerungszone (20) einen Wulstkern (80) aufweist, um den ein Teil der Verstärkungsstruktur (10) vom Karkassentyp zumindest teilweise umgeschlagen ist.

## Claims

1. Tyre comprising at least one carcass-type reinforcement structure (10) anchored on each side of the tyre in a bead (1) whose base is intended to be mounted on a rim seat, each bead extending radially outwards by a sidewall (6), the sidewalls radially outwardly joining a tread, the carcass-type reinforcement structure extending circumferentially from the bead to the sidewall, and a crown reinforcement, each of the beads further comprising a main anchoring region (20) for supporting the reinforcement structure, the tyre comprising in a radially outer position relative to the anchoring region a rim protector (70) provided with a rubber projection extending axially outwardly relative to the sidewall (6) and comprising at least one secondary anchoring region (30) comprising a plurality of circumferential cord windings, the windings cooperating with an adjacent portion of a secondary reinforcement structure (11) via a rubber anchoring mix (60), **characterised in that** the anchoring regions are oriented substantially radially.

2. Tyre according to claim 1, wherein the secondary reinforcement structure (11) is a structure portion extending from the rim protector (70) up to a radially outer portion of the sidewall.

3. Tyre according to either of claims 1 or 2, wherein the secondary reinforcement structure (11) cooperates with the first reinforcement structure (10).

4. Tyre according to one of claims 1 to 3, wherein the secondary reinforcement structure (11) extends from one sidewall of the tyre to the other along a meridian path substantially adjacent to that of the first carcass-type reinforcement structure (10).

5. Tyre according to one of claims 1 to 3, wherein the secondary reinforcement structure (11) consists of a plurality of carcass-type reinforcement structure sections of limited circumferential lengths, whose axial position separates from the two other adjacent circumferential sections from the sidewall to the rim protector.

6. Tyre according to one of claims 1 to 5, wherein the main anchoring region (20) comprises a plurality of circumferential windings (21) cooperating with the adjacent reinforcement structure portion (10) via a rubber anchoring mix (60).

7. Tyre according to one of claims 1 to 5, wherein the main anchoring region (20) comprises a bead wire (80) about which a portion of the carcass-type reinforcement structure (10) is at least partially wound.
